# EUROPEAN PATENT APPLICATION

(11) **EP 1 329 248 A1**
(43) Date of publication of application: **23.07.2003**
(21) Application number: 01938870.1
(22) Date of filing: 26.04.2001
(51) Int. Cl.: A63F 13/00

(54) **TELEVISION GAMESHOW METHOD FOR REDUCING THE NUMBER OF VIEWERS WHO FAIL TO TUNE IN DURING TELEVISION ADVERTISING**

(30) Priority: 28.04.2000 RU 2000110658
(71) Applicant: Kochukov, Andrei Nikolaevich, Moscow, 119034 (RU); Nitsberg, Mikhail Alexandrovich, Moscow, 127474 (RU)
(72) Inventor: Kochukov, Andrei Nikolaevich, Moscow, 119034 (RU); Nitsberg, Mikhail Alexandrovich, Moscow, 127474 (RU)
(74) Representative: Patentanwälte Zellentin & Partner
(86) International application number: RU0100178
(87) International publication number: WO01087440

(57) **Abstract**

The invention relates to television games with the participation of viewers. Said invention improves the effectiveness of television advertising by be diverting viewers from changing a TV channel during advertising and capturing the attention thereof with respect to the advertising. During the advertising spot, decimal digits are exposed for viewers attention and the order thereof is preserved. The viewers are informed that they can transmit the information about the decimal digits and a sequence thereof as it is perceived by a viewer. The received information of about at least three decimal digits is compared with the original sequence, and a decision on one of three results of the game is taken, i.e. on a total or partial gain or on failure with respect to a degree of coincidence between the viewers' information and the original sequence. This means that the possibility of winning is conditioned by the need to see a large number of advertising spots containing the decimal digits, thereby decreasing the number of viewers who refuse to watch the advertising spots.

## Description

### Field of the Invention

The present invention relates to television games and more particularly to television games with the participation of viewers who are outside the television studio and have a chance of winning prizes. Such games can also improve the effectiveness of television advertising by discouraging the viewers from immediately changing television channels when broadcasting of commercials begins.

### Description of Related Art

The problem of viewers avoiding watching television advertising was first reported in the USA in 1952 when from analysis of indirect factors during broadcasting television films it was concluded that the viewership significantly reduced during advertising.

Symposium devoted to "Commercial zapping: controversy and confusion", held in Chicago in 1984, stated that the problem of viewer's avoidance significantly impair the effectiveness of television advertising. It was noted that the phenomenon referred to as "zapping" (switching the television channels in order to avoid watching commercials) is responsible for the loss of more that one third of money paid by advertisers due to the reluctance of viewers to watch permanently broadcast and, therefore, boring commercials. Instead, the viewers change the channels, switch off the televisions or avoid watching the commercials in some other ways.

A television game for viewer participation is described in US Patent No.5,271,626, Cl. A63F 009/22, published 21.12.1993. An embodiment of the game involves: transmitting television program signals divided by television breaks, and transmitting television commercial signals during the television breaks, a plurality of black space signals being transmitted between the television program signals and commercial signals and between the commercial signals; adding detection signals to at least one of the television program signals and the commercials transmitted by the television commercial signals, wherein the detection signals indicate that one of the black spaces is about to occur; using signal detection means for detecting the detection signals added to the television program and commercial signals; using processor means operatively connected to the signal detection means for determining when each black space is about to occur and for randomly selecting at least one of the black spaces; and using game information insert means for inserting game information comprising at least one of introductory information, game clues and instructions into the randomly selected black spaces.

Another embodiment of the television game comprises:
transmitting to viewers television program signals divided by television breaks; transmitting commercial signals during the television breaks, the television commercial signals representing at least one commercial, wherein at least one period of time in which a predetermined low light level is transmitted occurs between at least one of a program signal and
a commercial signal and commercial signals; using light detection means for detecting at least one low light period, wherein each low light period indicates a black space; using processing means, operatively connected to the light detection means, for randomly selecting at least one low light period detected by the light detection means; and using game information insertion means, operatively connected to the light detection means, for inserting game information comprising at least one of introductory information, game clues and
instructions into the randomly selected at least one low light period.

Despite the fact that the prior art television game can be organized and conducted at a reduced cost because the game information is inserted into the breaks (e.g. black spaces) that are unused for substantive programs, it fails to encourage the viewers in watching commercials.

### Summary of the Invention

The object of the present invention is to provide a television game method that improves the effectiveness of television advertising programs (blocks of commercials) by discouraging the viewers from changing television channels when commercials are broadcast and by attracting the viewers' attention to blocks of commercials.

A further object of the present invention is to increase gross rating points (GRP) of television programs in predetermined regions of television broadcasting areas.

The above objects are attained in a television game method for reducing the number of viewers who avoid watching blocks of commercials including at least one commercial and being part of a daily television programming, both when an advertising spot for broadcasting a block of commercials is announced or not, comprising the steps of: displaying to viewers an insert such as an image of a decimal digit at least three times in a predetermined time slot during broadcasting the daily television programming, said decimal digit being each time selected from zero to nine, said time slot for displaying each of the inserts being selected from the group including: a time slot immediately before the block of commercials, a time slot immediately after at least one commercial, a time slot immediately after the block of commercials, and any combination of said time slots, said group further including a time slot immediately before an advertising spot if it is announced; storing the sequence of the decimal digits displayed; informing the viewers that they can communicate information about at least three decimal digits sequentially displayed in said inserts on at least one communication channel; specifying a time period for receiving information from the viewers by setting a reception start instant and a reception duration; receiving said information from a viewer first established communication over said communication channel during said time period; comparing the received information about at least three decimal digits with the stored sequence of the decimal digits displayed; taking decision on one of three game results selected from the group including: total gain, partial gain and failure, the total gain decision being taken when the received information fully coincides with the stored sequence, the failure decision being taken when no more than two decimal digits coincide with the decimal digits sequentially displayed in the inserts, in the remaining cases the partial gain decision being taken.

The at least one communication channel may be a telephone line.

In an embodiment, a pseudo-random sequence including from two to six decimal digits is generated and displayed to the viewers, said sequence may be selected from a plurality of sequences from which telephone numbers begin in regions of a telephone network service area to which the daily television programming is broadcast. A region of the telephone network service area in which telephone numbers begin from said pseudo-random sequence may be displayed to viewers on a telephone network service map, and the information may be received only from those viewers whose telephone numbers begin from said sequence.

When the total gain decision is taken, the viewer is informed about winning a major prize, and when the partial gain decision is taken, the viewer is informed about winning an incentive prize, and if the telephone number of the viewer having communicated first begins from said pseudo-random sequence, the viewer is informed about winning a participation prize. It may be provided that in case of failure or partial gain, or if no information is received from the viewers, the major prize for total gain will be increased by a predetermined amount.

The predetermined time slot for the insert may be at least 200 ms, and the reception duration of the time period for receiving information from viewers may be no more than 120 s, the reception duration of the time period for receiving information from viewers may be monitored by a count-down timer displayed to viewers.

The above object can be also attained in a television game method for reducing the number of viewers who avoid watching blocks of commercials including at least one commercial and being part of a daily television programming, both when an advertising spot for broadcasting a block of commercials is announced or not, comprising the steps of: displaying to viewers an insert such as an image of a decimal digit at least three times in a predetermined time slot during broadcasting the daily television programming, said decimal digit being each time selected from zero to nine, the time slot for displaying each of said inserts being selected from the group including: a time slot immediately before the block of commercials, a time slot immediately after at least one commercial, a time slot immediately after the block of commercials, and any combination of said time slots, said group further including a time slot immediately before the advertising spot if it is announced to viewers; storing the sequence of the decimal digits displayed; generating a pseudo-random sequence of decimal digits based on a plurality of sequences from which telephone numbers begin in regions of a telephone network service area, said daily television programming being broadcast to said regions; displaying the generated pseudo-random sequence to viewers and informing the viewers that they can communicate, by telephone, information about at least three decimal digits sequentially displayed in said inserts; specifying a time period for receiving information from viewers by setting a reception start instant and a reception duration; receiving said the information from a viewer first telephoned within said time period; comparing said information with the stored sequence of the decimal digits displayed; taking decision on one of three game results selected from the group including: total gain, partial gain and failure; the total gain decision being taken when the received information fully coincides with the stored sequence, the failure decision being taken when no more than two decimal digits coincide with the decimal digits sequentially displayed in the inserts, in the remaining cases the partial gain decision being taken, and if the viewer's telephone number begins from said pseudo-random sequence, the viewer is informed about winning a participation prize.

In a further embodiment, the viewership that can communicate information of the decimal digits displayed in the inserts is restricted to only those viewers whose telephone numbers begin from the generated pseudo-random sequence.

As mentioned before, the present invention also makes it possible to increase gross rating points of television programs. This can be achieved by setting different occurrence probability parameters of pseudo-random sequences from a plurality of sequences from which telephone numbers begin in different regions of the television broadcast area. The occurrence probability of different combinations correlates with the gross rating points of a television program in said regions. By way of example, if a television program has minimum rating in the region in which telephone numbers begin predominantly from combination "257", the occurrence probability of the "257" pseudo-random sequence should be maximum so that to enable predominantly the viewers in this region to participate in the game.

### Brief Description of the Drawings

The present invention will become apparent to those skilled in the art from the following description of its preferred embodiments with reference to the accompanying drawings, in which:
Fig.1 is a block diagram showing an arrangement of television programs in a fragment of a daily television programming containing blocks of commercials;
Fig.2 is a block diagram showing an arrangement of television programs in a fragment of a daily television programming containing blocks of commercials and announcements of advertising spots for broadcasting the blocks of commercials;
Fig.3 is a block diagram showing an arrangement of inserts in a fragment of a daily television programming containing blocks of commercials;
Fig.4 is a block diagram showing an arrangement of inserts in a fragment of a daily television programming containing blocks of commercials and announcements of advertising spots for broadcasting the blocks of commercials;
Fig.5 is a block diagram showing an arrangement of inserts in blocks of commercials;
Fig.6 is a block diagram showing a process of implementing a television game in accordance with a first preferred embodiment of the present invention;
Fig.7 is a block diagram showing a process of implementing a television game in accordance with a second preferred embodiment of the present invention.

It is worthy to note that the arrangement and alternation of television programs and blocks of commercials in the drawings attached are arbitrary, and it should be appreciated that the present invention can be practiced with any arrangement and alternation of television programs and blocks of commercials.

### Detailed Description of the Embodiments

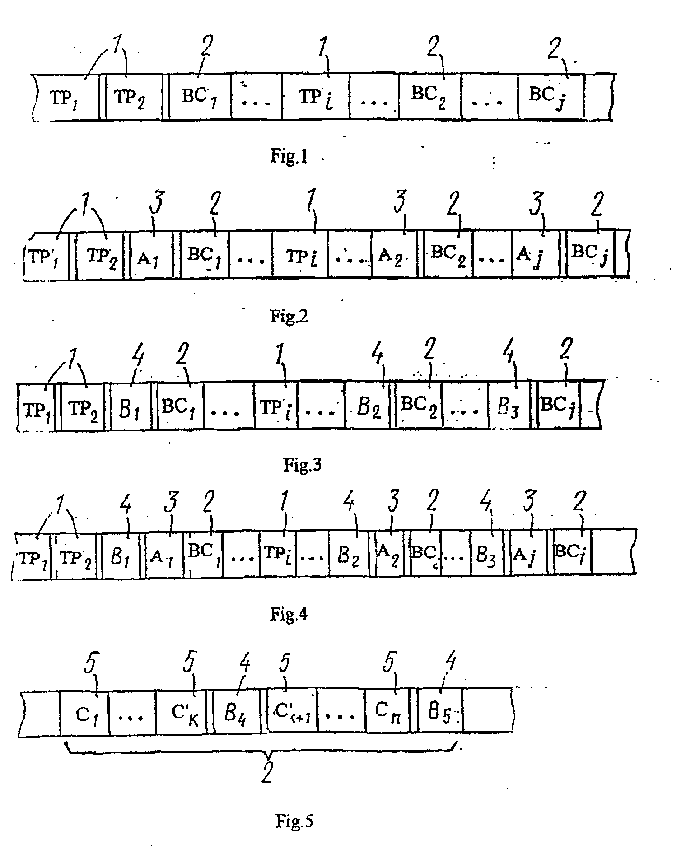

Referring now to Fig.1, a block diagram shows an arrangement of television programs in a fragment of a daily television programming comprising television programs TP₁, TP₂, TPᵢ denoted by reference numeral 1 and blocks of commercials BC₁, BC₂, BCᵢ denoted by reference numeral 2. Fig.2 shows an arrangement of television programs TP₁, TP₂, TPᵢ denoted by reference numeral 1 and blocks of commercials BC₁, BC₂, BCᵢ with announcements A₁, A₂, Aᵢ denoted by reference numeral 3 about advertising spots for broadcasting a respective block of commercials.

Upon analysis of results of various studies, the inventor has concluded that the majority of viewers are tending to change the channel or do something of this sort in order to avoid watching television commercials immediately at the beginning of broadcasting a block of commercials or when an announcement is broadcast that an advertising spot is about to occur. The inventor defines such time slots as "critical" ones during which some measures are to be taken in order to maintain the viewers' attention at the subsequently broadcast current block of commercials and discourage the majority of viewers from avoiding watching the beginning commercials.

Fig.3 shows an arrangement of inserts B₁, B₂, B₃ denoted by reference numeral 4 in a daily television programming immediately before blocks of commercials BC₁, BC₂, BCⱼ denoted by reference numeral 2. As mentioned before, the number of inserts is not restricted to three, the number shown in the figure is only illustrative. Fig.4 shows an arrangement of inserts B₁, B₂, B₃ denoted by reference numeral 4 immediately before announcements Aᵢ, A, Aⱼ denoted by reference numeral 3 of advertising spots for broadcasting blocks of commercials BC₁, BC₂, BCⱼ denoted by reference numeral 2.

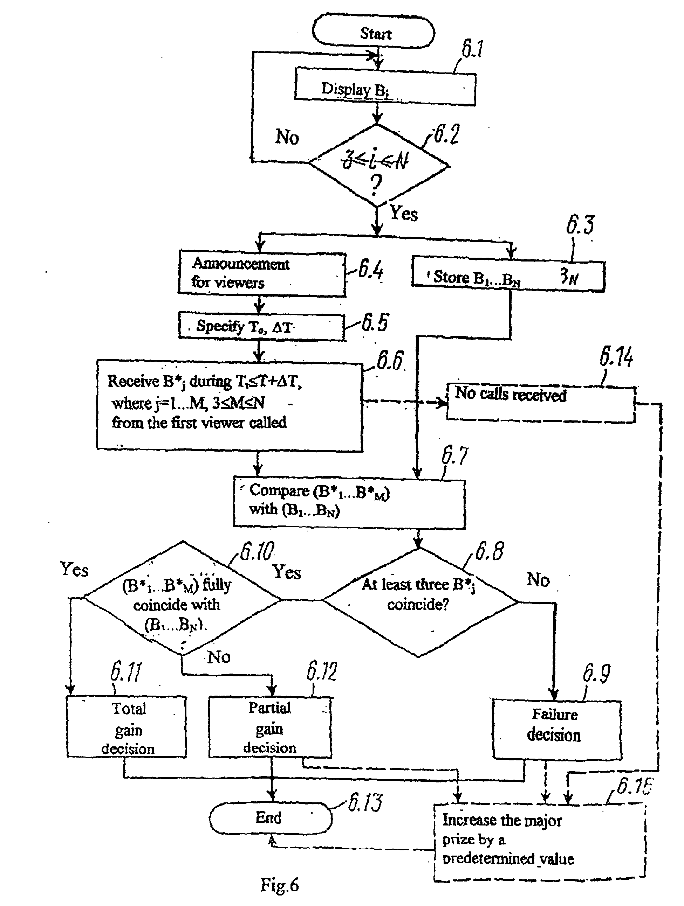

As shown in Figs 3 and 4, inserts B_{1,} B₂, B₃ are inserted into the television programming substantially in the "critical" time slots. Fig.5 shows an arrangement of insert B₄ in the block 2 of commercials including commercials C₁ ... Cₙ, e.g. between commercials Cₖ and C₍ₖ₊ₗ₎ denoted by reference numeral 5, and an arrangement of insert B₅ immediately after broadcasting the last commercial Cₙ, i.e. after the end of the block 2 of commercials. It is appreciated that more than one insert can be inserted between commercials within the block of commercials.

Fig.6 shows a block diagram of a process of implementing a first preferred embodiment of a television game, wherein the number of viewers who avoid watching blocks of commercials included in a daily television programming is reduced by performing the following steps.

At step 6.1, an insert such as an image of a decimal digit from zero to nine is displayed to viewers in a predetermined time slot for displaying inserts selected from the group including: a time slot immediately before a block of commercials, a time slot immediately after at least one commercial, a time slot immediately after the block of commercials, and any combination of said time slots, said group further including time slot immediately before an advertising spot if an announcement of the advertising spot is broadcast. The step is repeated at least three times and maximum N times during broadcasting the daily television programming, this process being monitored at step 6.2. At step 6.3, the sequence of inserts Bᵢ with decimal digits displayed at steps 6.1-6.2, where i=1...N, N≥3, is stored. At step 6.4, viewers are informed that they can communicate, over a predetermined communication channel, information about at least three decimal digits B*ⱼ, where j=1...M, 3≤M≤N, that were, in the viewer's opinion, sequentially displayed in the inserts at steps 6.1 and 6.2. At step 6.5, a time period is specified for receiving information B*ⱼ from viewers by setting a reception start instant T₀ and a reception duration ΔT. At step 6.6, information B*ⱼ is received from a viewer first communicated over the communication channel during time period Tᵣ≤T₀+ΔT, the duration of which is monitored at the same step. The information B*ⱼ received from the viewer at step 6.7 is compared with the sequence Bⱼ stored at step 6.3.

At step 6.8, the check is made whether at least three digits from the successive inserts coincide. At step 6.9, the game is closed if less than three decimal digits B*ⱼ coincide with the stored sequence Bᵢ and a failure decision is taken. At step 6.10, the check is made whether the information of decimal digits B*ⱼ fully coincides with the stored sequence Bᵢ, and if affirmative, i.e. when Bᵢ=B*ⱼ, at i=j=1...N, a total gain decision is taken at step 6.11, while if they partially coincide, a partial gain decision is taken (step 6.12) whereupon the game is terminated at step 6.13.

It may be provided that if there is no calls from viewers (as determined at step 6.14), or if the failure decision or partial gain decision is taken, a major prize for the total gain will be increased by a predetermined amount (step 6.15) and the prize will be played off in the next game, e.g. when another daily television programming is broadcast.

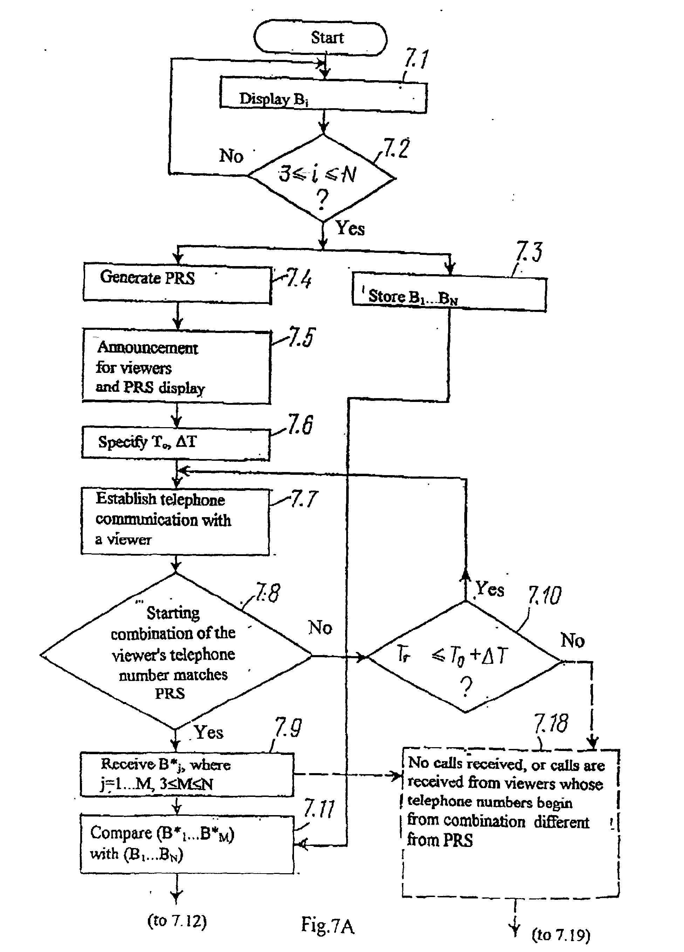

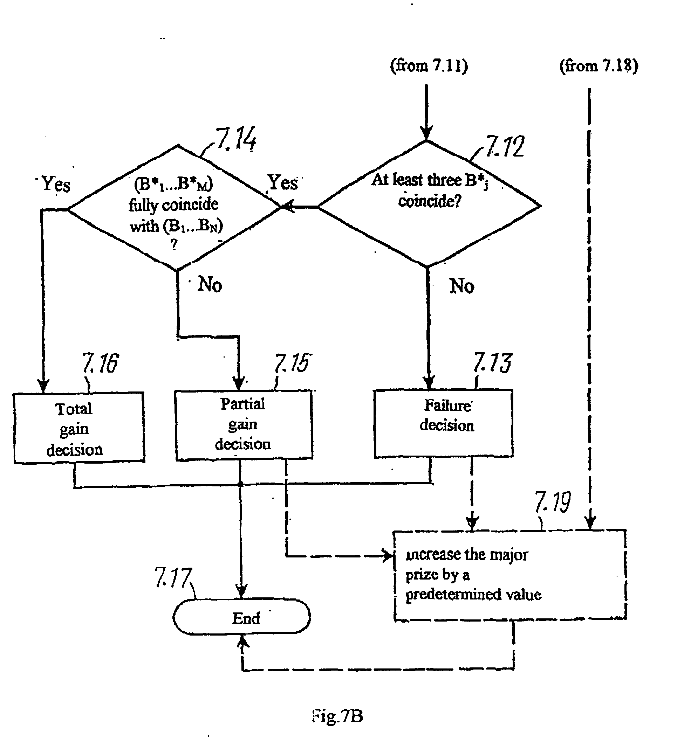

Fig.7 shows a block diagram of a second embodiment of implementing a television game method, wherein the viewers are discouraged from changing the television channel at the beginning of broadcasting commercials by performing the following steps.

At step 7.1, an insert such as image of a decimal digit from zero to nine is displayed to viewers in a predetermined time slot for displaying inserts selected from the group including: a time slot immediately before a block of commercials, a time slot immediately after at least one commercial, a time slot immediately after the block of commercials, and any combination of said time slots, the group further including a time slot immediately before an advertising spot if it is announced. The step is repeated minimum three times and maximum N times during broadcasting a daily television programming, this process being monitored at step 7.2. A sequence of inserts Bᵢ with decimal digits, where i=1...N, N≥3, displayed at steps 7.1-7.2 is stored at step 7.3.

At step 7.4, a pseudo-random sequence (PRS) of decimal digits is generated on the basis of a plurality of sequences from which telephone numbers begin in regions of a telephone network service area, the daily television programming being broadcast to said regions. At step 7.5, the generated PRS is displayed and the viewers are informed that they can communicate, by telephone, information about at least three decimal digits B*ⱼ, where j=1...M, 3≤M≤N, which were, in the viewer's opinion, sequentially displayed in the inserts at steps 7.1 and 7.2. At step 7.6, a time period is specified for receiving information B*ⱼ from viewers by setting a reception start instant Tₒ and a reception duration ΔT. At step 7.7, telephone communication is established with a called viewer, and at step 7.8 the check is made whether the initial combination of digits in the viewer's telephone number coincides with the PRS. If the initial combination does not coincide with the PRS, the communication with the viewer is terminated, and the check is made whether condition Tᵣ≤T₀≤ΔT is met (7.10), and if affirmative, the process returns to step 7.7.

If the initial combination coincides with the PRS, information B*ⱼ is received from the viewer (step 7.9) and compared at step 7.11 with the sequence Bⱼ stored at step 7.3.

At step 7.12, the check is made whether at least three digits from the successive inserts coincide. At step 7.13, the game is closed if less than three decimal digits B*ⱼ coincide with the stored sequence Bᵢ, and a failure decision is taken. At step 7.14, the check is made whether the information of decimal digits B*ⱼ fully coincides with the stored sequence Bᵢ, and if affirmative, i.e. when Bᵢ=B*ⱼ, at i=j=1...N, a total gain decision is taken at step 7.16, and if they partially coincide a partial gain decision is taken at step 7.15, whereupon the game is terminated at step 7.17.

It may be provided that if no calls have been received from viewers or calls have been received from the viewers whose telephone numbers begin from combinations different from the PRS (as determined at step 7.18), or when the failure decision or partial gain decision has been taken, the major prize can be increased by a predetermined amount (step 7.19) and the prize can be played off in the next game, e.g. when another daily television programming is broadcast.

### Industrial Applicability

The present invention is applicable in television broadcasting systems, as well as in network and other communication systems that provide information services to users and include advertising in their service.

## Claims

1. A television game method for reducing the number of viewers who avoid watching blocks of commercials including at least one commercial and being part of a daily television programming, comprising the steps of:
displaying to viewers an insert such as an image of a decimal digit at least once in a predetermined time slot during broadcasting the daily television programming, said decimal digit being each time selected from zero to nine, said time slot for displaying each of the inserts being selected from the group including: a time slot immediately before the block of commercials, a time slot immediately after at least one commercial, a time slot immediately after the block of commercials, and any combination of said time slots;
storing the sequence of the decimal digits displayed;
informing the viewers that they can communicate information about at least three decimal digits sequentially displayed in said inserts on at least one communication channel;
specifying a time period for receiving said information from the viewers by setting a reception start instant and a reception duration;
receiving said information from a viewer first established communication over said communication channel during said time period;
comparing the received information about at least three decimal digits with the stored sequence of the decimal digits displayed;
taking decision on one of three game results selected from the group including: total gain, partial gain and failure,
the total gain decision being taken when the received information fully coincides with the stored sequence, the failure decision being taken when no more than two decimal digits coincide with the decimal digits sequentially displayed in the inserts, in the remaining cases the partial gain decision being taken.

2. The method according to claim 1, wherein said at least one communication channel is a telephone line.

3. The method according to claim 2, wherein a pseudo-random sequence of decimal digits is generated and displayed to the viewers, said pseudo-random sequence including from two to six decimal digits.

4. The method according to claim 3, wherein said pseudo-random sequence is selected from a plurality of sequences from which telephone numbers begin in regions of a telephone network service area, said daily television programming being broadcast to said regions.

5. The method according to claim 3 or 4, wherein a region of the telephone network service area in which telephone numbers predominantly begin from said pseudo-random sequence is displayed to the viewers on a telephone network service map.

6. The method according to any one of claims 1 and 2, wherein when the total gain decision is taken, the viewer is informed about winning a major prize, and when the partial gain decision is taken, the viewer is informed about winning an incentive prize.

7. The method according to any one of claims 3 to 6, wherein said information is received only from the viewers whose telephone numbers begin from said pseudo-random sequence.

8. The method according to any one of claims 3 to 6, wherein if the telephone number of the viewer having communicated first begins from said pseudo-random sequence, the viewer is informed about winning a participation prize.

9. The method according to any one of claims 6 to 8, wherein if the failure decision or partial gain decision is taken, or if no information is received from the viewers, the viewers are informed that the major prize for total gain will be increased by a predetermined amount.

10. The method according to any one of claims 1 to 9, wherein said predetermined time slot for an insert is at least 200 ms.

11. The method according to any one of claims 1 to 10, wherein said reception duration of the time period for receiving information from the viewers is no more than 120 s.

12. The method according to any one of claims 1 to 11, wherein said reception duration of the time period for receiving information from the viewers is monitored by a count-down timer enabled at the reception start instant when reception of information from the viewers begins, the timer readings being displayed to the viewers.

13. A television game method for reducing the number of viewers who avoid watching blocks of commercials including at least one commercial and being part of a daily television programming, wherein an advertising spot for broadcasting a block of commercials is announced before broadcasting each of the blocks of commercials, comprising the steps of:
displaying to viewers an insert such as an image of a decimal digit at least once in a predetermined time slot during broadcasting the daily television programming, said decimal digit being each time selected from zero to nine, the time slot for displaying each of said inserts being selected from the group including: a time slot immediately before said announcing of an advertising spot for broadcasting a block of commercials, a time slot immediately before the block of commercials, a time slot immediately after at least one commercial, a time slot immediately after the block of commercials, and any combination of said time slots;
storing the sequence of the decimal digits displayed;
informing the viewers that they can communicate information about at least three decimal digits sequentially displayed in said inserts on at least one communication channel;
specifying a time period for receiving information from the viewers by setting a reception start instant and a reception duration;
receiving said information from a viewer first established communication over said communication channel during said time period;
comparing the received information about at least three decimal digits with the stored sequence of the decimal digits displayed;
taking decision on one of three game results selected from the group including: total gain, partial gain and failure,
the total gain decision being taken when the received information fully coincides with the stored sequence, the failure decision being taken when no more than two decimal digits coincide with the decimal digits sequentially displayed in the inserts, in the remaining cases the partial gain decision being taken.

14. The method according to claim 13, wherein said at least one communication channel is a telephone line.

15. The method according to claim 14, wherein a pseudo-random sequence of decimal digits is generated and displayed to the viewers, said pseudo-random sequence including from two to six decimal digits.

16. The method according to claim 15, wherein said pseudo-random sequence is selected from a plurality of sequences from which telephone numbers begin in regions of a telephone network service area, said daily television programming being broadcast to said regions.

17. The method according to claim 15 or 16, wherein a region of the telephone network service area in which telephone numbers predominantly begin from said pseudo-random sequence is displayed to the viewers on a telephone network service map.

18. The method according to any one of claims 13 and 14, wherein when the total gain decision is taken, the viewer is informed about winning a major prize, and when the partial gain decision is taken, the viewer is informed about winning an incentive prize.

19. The method according to any one of claims 15 to 18, wherein said information is received only from the viewers whose telephone numbers begin from said pseudo-random sequence.

20. The method according to any one of claims 15 to 18, wherein if the telephone number of the viewer having communicated first begins from said pseudo-random sequence, the viewer is informed about winning a participation prize.

21. The method according to any one of claims 18 to 20, wherein if the failure decision or partial gain decision is taken, or if no information is received from the viewers, the viewers are informed that the major prize for total gain will be increased by a predetermined amount.

22. The method according to any one of claims 13 to 21, wherein said predetermined time slot for an insert is at least 200 ms.

23. The method according to any one of claims 13 to 22, wherein said reception duration of the time period for receiving information from the viewers is no more than 120 s.

24. The method according to any one of claims 13 to 23, wherein said reception duration of the time period for receiving information from the viewers is monitored by a count-down timer enabled at the reception start instant when reception of information from the viewers begins, the timer readings being displayed to the viewers.

25. A television game method for reducing the number of viewers who avoid watching commercials blocks including at least one commercial and being part of a daily television programming, comprising the steps of:
displaying to viewers an insert such as an image of a decimal digit at least three times in a predetermined time slot during broadcasting the daily television programming, said decimal digit being each time selected from zero to nine, the time slot for displaying each of said inserts being selected from the group including: a time slot immediately before the block of commercials, a time slot immediately after at least one commercial, a time slot immediately after the block of commercials, and any combination of said time slots;
storing the sequence of the decimal digits displayed;
generating a pseudo-random sequence of decimal digits based on a plurality of sequences from which telephone numbers begin in regions of a telephone network service area, said daily television programming being broadcast to said regions;
displaying the generated pseudo-random sequence to the viewers and informing the viewers that they can communicate, by telephone, information about at least three decimal digits sequentially displayed in said inserts;
specifying a time period for receiving information from the viewers by setting a reception start instant and a reception duration;
receiving said information from a viewer first telephoned during said time period;
comparing the received information with the stored sequence of the decimal digits displayed;
taking decision on one of three game results selected from the group including: total gain, partial gain and failure;
the total gain decision being taken when the received information fully coincides with the stored sequence, the failure decision being taken when no more than two decimal digits coincide with the decimal digits sequentially displayed in the inserts, in the remaining cases the partial gain decision being taken, and if the viewer's telephone number begins from said pseudo-random sequence, the viewer being informed about winning a participation prize.

26. The method according to claim 25, wherein said predetermined time slot for an insert is at least 200 ms, and said reception duration of the time period for receiving said information from the viewers is no more than 120 s.

27. A television game method for reducing the number of viewers who avoid watching blocks of commercials including at least one commercial and being part of a daily television programming, wherein an advertising spot for broadcasting a block of commercials is announced before broadcasting each of the blocks of commercials, comprising the steps of:
displaying to viewers an insert such as an image of a decimal digit at least three times in a predetermined time slot during broadcasting the daily television programming, said decimal digit being each time selected from zero to nine, the time slot for displaying each of said inserts being selected from the group including: a time slot immediately before said announcing of an advertising spot for broadcasting a block of commercials, a time slot immediately before the block of commercials, a time slot immediately after at least one commercial, a time slot immediately after the block of commercials, and any combination of said time slots;
storing the sequence of the decimal digits displayed;
generating a pseudo-random sequence of decimal digits based on a plurality of sequences from which telephone numbers begin in regions of a telephone network service area, said daily television programming being broadcast to said regions;
displaying the generated pseudo-random sequence to the viewers and informing the viewers that they can communicate, by telephone, information about at least three decimal digits sequentially displayed in said inserts;
specifying a time period for receiving information from viewers by setting a reception start instant and a reception duration;
receiving said information from a viewer first telephoned during said time period;
comparing the received information with the stored sequence of the decimal digits displayed;
taking decision on one of three game results selected from the group including: total gain, partial gain and failure,
the total gain decision being taken when the received information fully coincides with the stored sequence, the failure decision being taken when no more than two decimal digits coincide with the decimal digits sequentially displayed in the inserts, in the remaining cases the partial gain decision is taken, and if the viewer's telephone number begins from said pseudo-random sequence, the viewer being informed about winning a participation prize.

28. The method according to claim 27, wherein said predetermined time slot for an insert is at least 200 ms, and said reception duration of the time period for receiving said information from the viewers is no more than 120 s.

29. A television game method for reducing the number of viewers who avoid watching blocks of commercials including at least one commercial and being part of a daily television programming, comprising the steps of:
displaying to viewers an insert such as an image of a decimal digit at least three times in a predetermined time slot during broadcasting the daily television programming, said decimal digit being each time selected from zero to nine, the time slot for displaying each of said inserts being selected from the group including: a time slot immediately before the block of commercials, a time slot immediately after at least one commercial, a time slot immediately after the block of commercials, and any combination of said time slots;
storing the sequence of the decimal digits displayed;
generating a pseudo-random sequence of decimal digits based on a plurality of sequences from which telephone numbers begin in regions of a telephone network service area, said daily television programming being broadcast to said regions;
displaying the generated pseudo-random sequence to the viewers and informing the viewers that those viewers whose telephone numbers begin from said pseudo-random sequence can communicate, by telephone, information about at least three decimal digits sequentially displayed in said inserts;
specifying a time period for receiving information from the viewers by setting a reception start instant and a reception duration;
receiving said information from a viewer whose telephone number begins from said pseudo-random sequence, first telephoned during said time period;
comparing the received information with the stored sequence of the decimal digits displayed;
taking decision on one of three game results selected from the group including: total gain, partial gain and failure;
the total gain decision being taken when the received information fully coincides with the stored sequence, the failure decision being taken when no more than two decimal digits coincide with the decimal digits sequentially displayed in the inserts, in the remaining cases the partial gain decision being taken.

30. The method according to claim 29, wherein said predetermined time slot for an insert is at least 200 ms, and said reception duration of the time period for receiving said information from the viewers is no more than 120 s.

31. A television game method for reducing the number of viewers who avoid watching blocks of commercials including at least one commercial and being part of a daily television programming, wherein an advertising spot for broadcasting a block of commercials is announced before broadcasting each of the block of commercials, comprising the steps of:
displaying to viewers an insert such as an image of a decimal digit at least three times in a predetermined time slot during broadcasting the daily television programming, said decimal digit being each time selected from zero to nine, the time slot for displaying each of said inserts being selected from the group including: a time slot immediately before said announcing of an advertising spot for broadcasting a block of commercials, a time slot immediately before the block of commercials, a time slot immediately after at least one commercial, a time slot immediately after the block of commercials, and any combination of said time slots;
storing the sequence of the decimal digits displayed;
generating a pseudo-random sequence of decimal digits based on a plurality of sequences from which telephone numbers begin in regions of a telephone network service area, said daily television programming being broadcast to said regions;
displaying the generated pseudo-random sequence to the viewers and informing the viewers that those viewers whose telephone numbers begin from said pseudo-random sequence can communicate, by telephone, information about at least three decimal digits sequentially displayed in said inserts;
specifying a time period for receiving information from the viewers by setting a reception start instant and a reception duration;
receiving said information from a viewer whose telephone number begins from said pseudo-random sequence, first telephoned within said time period;
comparing said information with the stored sequence of the decimal digits displayed;
taking decision on one of three game results selected from the group including: total gain, partial gain and failure,
the total gain decision being taken when the received information fully coincides with the stored sequence, the failure decision being taken when no more than two decimal digits coincide with the decimal digits sequentially displayed in the inserts, in the remaining cases the partial gain decision being taken.

32. The method according to claim 31, wherein said predetermined time slot for an insert is at least 200 ms, and said reception duration of the time period for receiving said information from the viewers is no more than 120 s.
